# EUROPÄISCHE PATENTSCHRIFT

(11) **EP 2 321 549 B1**
(45) Veröffentlichungstag und Bekanntmachung des Hinweises auf die Patenterteilung: **28.03.2012**
(21) Anmeldenummer: 09777580.3
(22) Anmeldetag: 31.07.2009
(51) Int. Cl.: F16D 65/18

(54) **PNEUMATISCH BETÄTIGBARE SCHEIBENBREMSE**
PNEUMATICALLY ACTUABLE DISK BRAKE
FREIN À DISQUE ACTIONNABLE PNEUMATIQUEMENT

(30) Priorität: 01.08.2008 DE 102008036033
(43) Veröffentlichungstag der Anmeldung: 18.05.2011
(73) Patentinhaber: Knorr-Bremse Systeme für Nutzfahrzeuge GmbH, 80809 München (DE)
(72) Erfinder: BAUMGARTNER, Johann, 85368 Moosburg (DE); GRUBER, Robert, 83539 Pfaffing (DE); PERICEVIC, Aleksandar, 80636 München (DE); GEISSLER, Steffen, 63110 Rodgau (DE); TRIMPE, Robert, 82234 Wessling (DE)
(74) Vertreter: Mattusch, Gundula
(86) Internationale Anmeldenummer: PCT/EP2009/005563
(87) Internationale Veröffentlichungsnummer: WO 2010/012486

(56) Entgegenhaltungen:
- EP-B- 1 230 491
- WO-A-02/059494
- WO-A-2006/042621
- WO-A-2007/082658
- DE-C1- 19 855 614

## Beschreibung

Die Erfindung betrifft eine pneumatisch betätigbare Scheibenbremse nach dem Oberbegriff des Anspruchs 1.

Eine pneumatisch betätigbare Scheibenbremse ist beispielsweise aus der EP 0 553 105 B1 sowie der EP 1 230 491 B1 bekannt.

Dabei stützt sich der an einem Ende als Exzenter ausgebildete Bremshebel am Bremssattel als Widerlager ab. Aufgrund des funktionsbedingt relativ großen Schwenkwinkels des Bremshebels stellen sich entsprechend hohe Reibungsverluste der Exzenter-Lagerung ein. Zu deren Reduzierung werden deshalb Wälzlagerhalbschalen eingesetzt, die die Exzenter-Lagerung umhüllen.

Allerdings ist die Realisierung solcher Wälzlagerungen nur mit einem erheblichen Fertigungsaufwand möglich, mit entsprechend hohen Herstellungskosten.

Daneben ist eine solche Wälzlagerung naturgemäß relativ störanfällig, was einer optimierten Standzeit entgegensteht.

In der genannten EP1 230 491 B1 ist deshalb vorgeschlagen, zur Lagerung des Bremshebels am Bremssattel ausschließlich Gleitlager einzusetzen, die sich neben niedrigen Herstellungskosten durch eine besonders große Robustheit auszeichnen. Allerdings liegen die Reibbeiwerte der verwendeten wartungsfreien Gleitlager um ein Vielfaches über dem Rollwiderstandswert der Wälzlager, was sich natürlich auf die Bereitstellung einer vom Bremszylinder aufzubringenden Bremskraft auswirkt.

Zur Optimierung der pneumatisch betätigten Scheibenbremse ist deshalb in der veröffentlichten und gattungsbildenden WO 2009/090011 A1 vorgeschlagen, die Scheibenbremse mit einer Selbstverstärkungseinrichtung auszustatten, die einen Selbstverstärkungsfaktor aufweist, der derart gewählt ist, dass sich die Bremse nach Bremsungen selbsttätig löst.

Durch diese Maßnahme kann der Hub eines Bremszylinders, durch den mittels eines angeschlossenen Stößels der Bremshebel betätigbar ist, wesentlich kürzer sein, wodurch sich naturgemäß eine Verringerung des Schwenkwinkels des Bremshebels ergibt mit der Folge einer Reibbeiwertreduzierung der Schwenklager.

Dabei ist an den Bremshebel ein Druckstempel angeschlossen, der sich bei Betätigung des Bremshebels in Achsrichtung der Bremsscheibe bewegt und den angeschlossenen zuspannseitigen Bremsbelag gegen die Bremsscheibe presst.

Zur Abstützung des Bremsbelages, ebenso wie zur Realisierung der Selbstverstärkungseinrichtung sind in Umfangsrichtung der Bremsscheibe gesehen, beidseitig des Bremsstempels jeweils ein Druckstempel angeordnet, die einerseits am Bremssattel gelagert sind und andererseits mit dem Bremsbelag korrespondieren. Im Übrigen dienen die Druckstempel im Zusammenspiel mit einer Nachstelleinrichtung dem Ausgleich eines verschleißbedingten Lüftspiels.

In der bereits zitierten EP 1 230 491 B1 sind zur Realisierung der Gleitlagerung des Bremshebels im Bremssattel kalottenförmige Lageraufnahmen vorgesehen, in denen Lagerelemente in Form von Kugeln einliegen, die sich andererseits am Bremshebel abstützen.

Zur Bearbeitung der Lageraufnahmen ist es erforderlich, den Bremssattel zweiteilig auszubilden und die beiden Hälften des Bremssattels nach der Bearbeitung zu verschrauben.

Diese Verschraubung stellt jedoch eine potenzielle Schwachstelle dar, da die Schrauben die auf den Bremssattel einwirkenden Kräfte aufnehmen müssen.

Das Einbringen von Durchgangs- und Gewindebohrungen, ebenso wie die Bereitstellung der Schrauben selbst, stellen einen die Herstellungskosten ungünstig beeinflussenden Faktor dar, der insbesondere unter dem Aspekt, dass es sich bei Scheibenbremsen um Serienartikel handelt, die in großen Stückzahlen zum Einsatz kommen, von besonderer Bedeutung ist.

Aus der WO 2007/082658 A1 ist eine von der Gattung abweichende elektromechanisch betätigbare, selbstverstärkende Scheibenbremse bekannt, bei der der Bremssattel kalottenförmige Lageraufnahmen aufweist, in denen daran angepasste Gleit-Lagerelemente einliegen, über die sich der Bremshebel und die Druckstempel mit ihrer dem Bremsbelag abgewandten Seite am Bremssattel abstützen.

Der Erfindung liegt die Aufgabe zugrunde, eine Scheibenbremse der gattungsgemäßen Art so weiterzuentwickeln, dass sie einfacher und kostengünstiger herstellbar ist und ihre Betriebssicherheit dauerhaft verbessert wird.

Diese Aufgabe wird durch eine Scheibenbremse mit den Merkmalen des Anspruchs 1 gelöst.

Durch diese konstruktive Ausbildung können die kalottenförmigen Lageraufnahmen so klein dimensioniert sein, dass ein geeignetes Bearbeitungswerkzeug in den einteiligen Bremssattel einführbar ist.

Dabei müssen die Bearbeitungswerkzeuge, üblicherweise Bearbeitungsspindeln, schräg zur Bremsscheibendrehachse geführt werden. Um den entsprechenden Winkel im Sinne einer präzisen Bearbeitung noch in zusätzlichen Grenzen zu halten, wird der Bremssattelrücken zweckmäßigerweise so gestaltet, dass ohne Festigkeitsverlust ein ausreichender Freigang für die Bearbeitungsspindeln gegeben ist.

Durch die kalottenförmige Ausbildung der Lageraufnahmen kann bei Verwendung eines geeigneten Werkzeuges eine weitgehend freie Winkellage der Drehachse der Bearbeitungsspindel gewählt werden. Dies ist vor allem deshalb besonders vorteilhaft, als eine konzentrische Führung der Bearbeitungsspindel durch den Sattelrücken nicht möglich ist, da dieser ansonsten durch die entsprechenden Durchbrüche in seiner Festigkeit in nicht akzeptabler Weise gemindert würde.

Die Selbstverstärkungseinrichtung, die eine Führungsplatte einschließt, an der der Bremsbelag befestigt ist, ebenso wie ein Keilsystem, bedingt ein vergrößertes Schachtmaß der Bremse, gegenüber einer solchen ohne Selbstverstärkungseinrichtung, was das Einführen des Bearbeitungswerkzeuges in das Innere des Bremssattels begünstigt.

Anstelle einer schräg geführten Bearbeitungsspindel, kann die Bearbeitung der kalottenförmigen Lageraufnahmen auch durch angetriebene Winkelfräsköpfe erfolgen, so dass eine koaxiale Bearbeitung der Lageraufnahmen möglich ist.

Wenngleich sich das Schachtmaß des Bremssattels, wie erwähnt, durch den Einsatz der Selbstverstärkungseinrichtung vergrößert, so wird das gesamte Baumaß der Scheibenbremse, gesehen in Richtung der Bremsscheibenachse, durch den nun verringerten Hub des Bremszylinders sowie des verringerten Schwenkwinkels des Bremshebels reduziert.

Nach einer vorteilhaften Weiterbildung der Erfindung sind die Druckstempel, der Bremsstempel sowie die Nachstelleinrichtung einschließlich einer Synchronisationseinrichtung für die synchrone Verschleißnachstellung der Druckstempel mit einem die Montageöffnung des Bremssattels verschließenden Bodenblech und der Führungsplatte zu einer Baueinheit zusammengefasst.

Der Bremsstempel ist mit dem Bremsbelag derart verbunden, dass geringe Schwenkbewegungen des Bremsstempels, entsprechend der bei einer Bremsbetätigung auftretenden Umfangsverschiebung des Bremsbelages ermöglicht werden.

Eine im Servicefall erforderliche einfache Lösbarkeit der Verbindung des Bremsstempels mit dem Bremsbelag erfolgt gemäß der Erfindung über eine SchnappVerbindung, z.B. in Form eines in einer Nut des Druckstempels aufgenommenen Federrings, der bei hohen Zugkräften, wie sie zum Lösen der Verbindung bei einem Belagwechsel erforderlich sind, von einer ringförmigen Schrägschulter am Bremsbelag vollständig in die Nut zurückgedrückt wird, so dass die beiden Bauteile Druckstempel/Bremsbelag getrennt werden.

Statt im Bremsstempel kann die Nut zur Aufnahme des Federrings auch am Bremsbelag, insbesondere einer Belagträgerplatte des Bremsbelages, vorgesehen sein, während die ringförmige Schrägschulter am zugeordneten Bauteil vorgesehen ist.

Die zum Lösen dieser Verbindung erforderliche Rückzugskraft ist erheblich höher, vorzugsweise ein Mehrfaches der Federkraft der Rückstellfeder, um ein ungewolltes Trennen der Verbindung auszuschließen.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt auf eine erfindungsgemäße Scheibenbremse in einer geschnittenen Draufsicht
- Figuren 2 bis 4: jeweils einen erfindungsgemäßen Bremssattel während einer Bearbeitung in geschnittenen Ansichten.

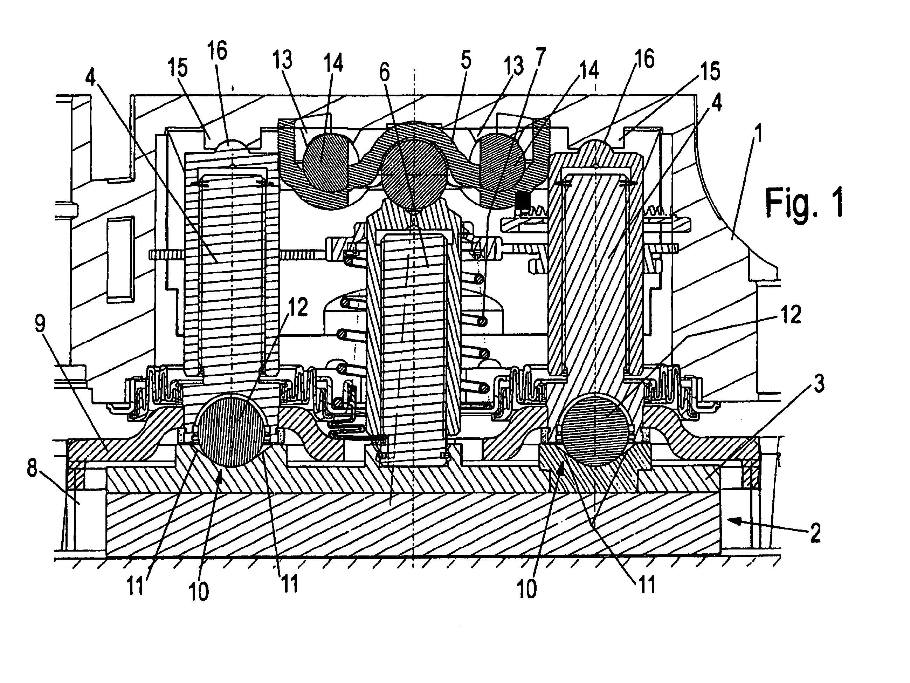

In der Figur 1 ist eine selbstverstärkende Scheibenbremse dargestellt, mit einem an einem ortsfesten Bremsträger 8 gehaltenen Bremssattel 1, einem zuspannseitigen Bremsbelag 2 und einem reaktionsseitigen, die gegen eine Bremsscheibe pressbar sind. Im Beispiel ist lediglich der zuspannseitige Bremsbelag 2 dargestellt.

Zum Zuspannen ist eine Zuspanneinrichtung mit einem Drehhebel 5 und einem Bremsstempel 6 vorgesehen, über den der Bremsbelag 2 in axialer Richtung, bezogen auf die Drehachse der Bremsscheibe, bewegbar ist.

Weiter ist eine Selbstverstärkungseinrichtung vorgesehen, die Spreizlager 10 aufweist, denen jeweils ein Druckstempel 4 zugeordnet ist, die mit einer Nachstelleinrichtung zur verschleißbedingten Nachstellung des Bremsbelages 2 in Eingriff stehen.

Die Druckstempel 4 sind mit ihrem dem Bremsbelag 2 zugewandten Endbereich in einer Führungsplatte 9 gehalten, die in dem Bremsträger 8 in Zuspannrichtung verschiebbar ist.

Jede Spreizlagerung 10 weist eine im zugeordneten Druckstempel 4 stirnseitig eingelassene Lagerkugel 12 auf, die andererseits in einer kalottenförmigen Vertiefung des Bremsbelages 2 einliegt, deren Seitenwand im Sinne von ansteigenden Rampen 11 ausgebildet ist.

Bei einer Bremsung, wenn also mittels des Bremshebels 5 der Bremsbelag 2 gegen die Bremsscheibe gepresst wird, entstehen Umfangskräfte, durch die der Bremsbelag 2 in Drehrichtung der Bremsscheibe verschoben wird, unter Abstandsveränderung zum Druckstempel 4.

Beim Lösen der Bremse wird der Bremsbelag 2 durch eine Rückstellfeder 7 in eine sozusagen entspannte Ausgangsstellung zurückgeführt, in der die Lagerkugel 12 praktisch funktionsfrei in der Vertiefung des Bremsbelages einliegt.

Der Bremshebel 5 ist um eine Exzenterdrehachse gegen den Bremsstempel 6 drehbar, die durch zwei kugelförmige Lagerelemente 14 gebildet wird, die einerseits in Kalotten des Bremshebels 5 und andererseits in kalottenförmigen Lageraufnahmen 13 des Bremssattels 1 einliegen.

Die in Umfangsrichtung der Bremsscheibe gesehen beidseitig neben dem Bremsstempel 6 angeordneten Druckstempel 4, sind auf ihrer dem Bremsbelag 2 abgewandten Stirnseite in kalottenartigen Lageraufnahmen 15 des Bremssattels 1 gelagert, wobei an die zugeordneten Stirnseiten der Druckstempel 4 ein im Sinne eines Kugelabschnitts ausgebildetes Gleit-Lagerelement 16 angeformt ist, das in der Lageraufnahme 15 einliegt. Anstelle des angeformten Gleit-Lagerelements 16 kann auch ein separates kugelförmiges Gleit-Lagerelement vorgesehen sein, das dann in einer entsprechend angeformten Vertiefung des Druckstempels 4 einliegt, vergleichbar der gegenüberliegenden Lagerkugel 12 im Bereich des Spreizlagers 10.

Die Lageraufnahmen 13, 15, die sich auf derselben Fläche des Bremssattels 1 befinden, der in diesem Bereich als Sattelkopf bezeichnet wird, sind bevorzugt in angegossene Vorsprünge eingebracht, wenn der einstückige Bremssattel 1 als Gussteil ausgebildet ist.

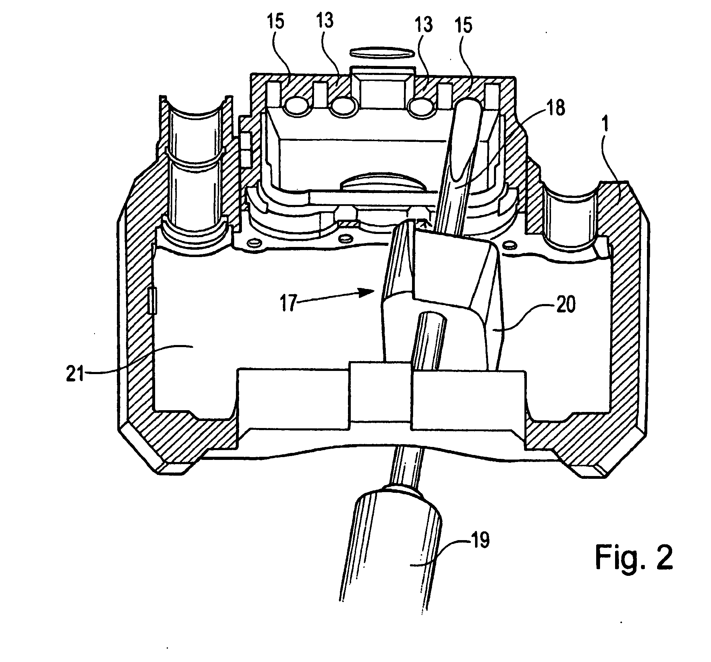

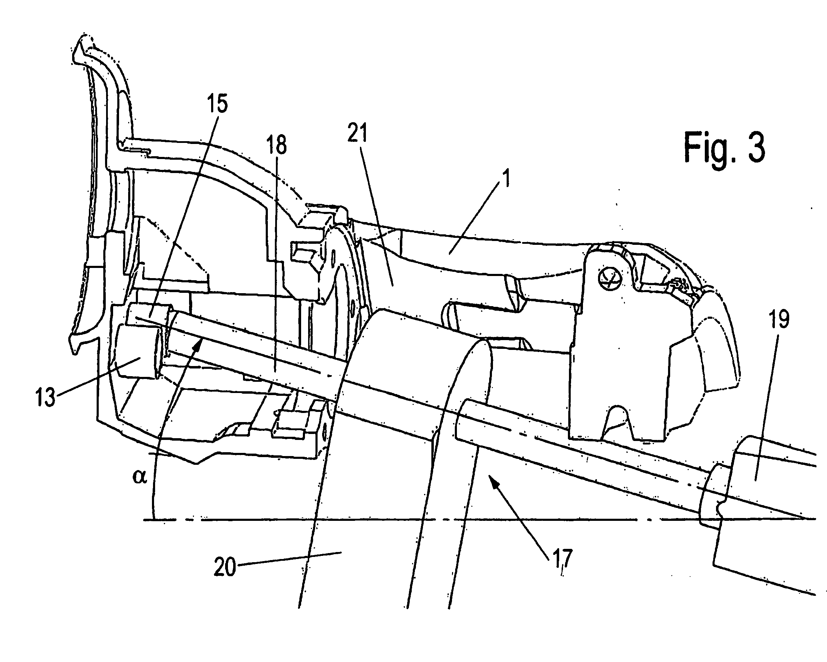

Die Bearbeitung der jeweils kalottenartigen Vertiefung der Lageraufnahmen 13, 15 ist, wie in den Figuren 2 und 3 dargestellt ist, mittels eines Bearbeitungswerkzeuges 17 durchführbar, das eine schräg von unten durch einen Schacht 21 des Bremssattels 1 geführte Bearbeitungsspindel 18 aufweist, mit einem kugelabschnittsförmigen Schneidkopf, mit dem die kalottenförmige Vertiefung der Lageraufnahmen 13, 15 bearbeitbar ist.

Die Bearbeitungsspindel 18 wird über einen Antrieb 19 angetrieben und mittels eines Führungsteiles 20 abgestützt, das in den Schacht 21 hineinragt.

Während die Figur 2 eine geschnittene Draufsicht auf den Bremssattel wiedergibt, zeigt die Figur 3 eine geschnittene Seitenansicht. In beiden Fällen ist jedoch die Bearbeitungsspindel 18 schräg eingeführt, was die kalottenförmige Ausbildung der Lageraufnahmen 13, 15 erlaubt.

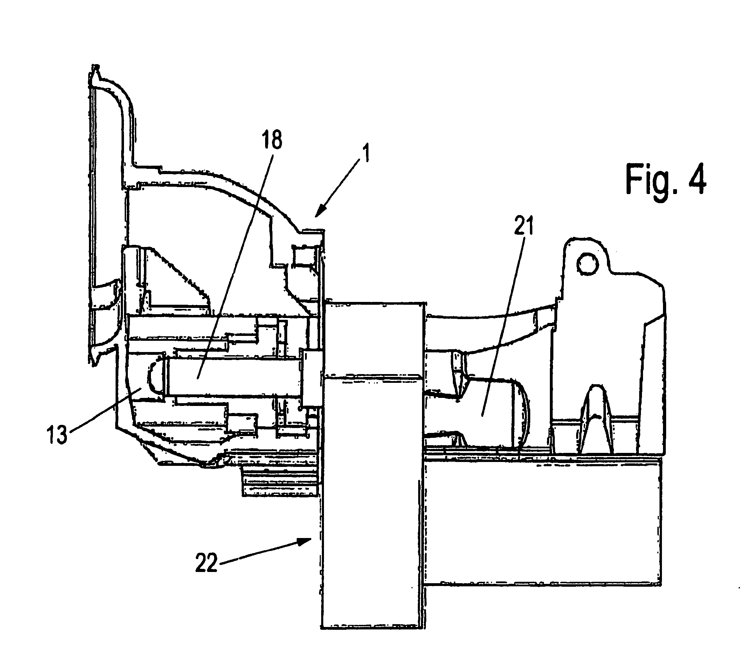

Eine andere Bearbeitungsvariante ist in der Figur 4 erkennbar.

Hier ist als Bearbeitungswerkzeug ein Winkelantrieb 22 vorgesehen, durch den die Bearbeitungsspindel 18 koaxial geführt werden kann. In diesem Fall kann der Winkelantrieb 22 von unten durch den Schacht 21 in den Bremssattel 1 eingeführt werden.

### Bezugszeichenliste

- 1: Bremssattel
- 2: Bremsbelag
- 3: Belagdruckplatte
- 4: Druckstempel
- 5: Bremshebel
- 6: Bremsstempel
- 7: Rückstellfeder
- 8: Bremsträger
- 9: Führungsplatte
- 10: Spreizlagerung
- 11: Rampe
- 12: Lagerkugel
- 13: Lageraufnahme
- 14: Gleit-Lagerelement
- 15: Lageraufnahme
- 16: Gleit-Lagerelement
- 17: Bearbeitungswerkzeug
- 18: Bearbeitungsspindel
- 19: Antrieb
- 20: Führungsteil
- 21: Schacht
- 22: Winkelantrieb

## Patentansprüche

1. Pneumatisch betätigbare Scheibenbremse, mit einem eine Bremsscheibe übergreifenden Bremssattel (1), beidseitig an die Bremsscheibe anpressbaren Bremsbelägen (2), von denen ein zuspannseitiger Bremsbelag mittels eines um eine Exzenterachse schwenkbaren Bremshebels (5) einer Zuspanneinrichtung betätigbar ist, an dem ein Bremsstempel (6) stirnseitig anliegt, der andererseits am zuspannseitigen Bremsbelag (2) angeschlossen ist, zwei zum Bremsstempel (6) gleichgerichtet und abständig dazu angeordneten Druckstempeln (4), die jeweils am Bremssattel (1) und am Bremsbelag (2) oder der Führungsplatte (9) angeschlossen sind, sowie einer Selbstverstärkungseinrichtung, **dadurch gekennzeichnet, dass** der Bremssattel (1) kalottenförmige Lageraufnahmen (13, 15) aufweist, in denen daran angepasste Gleit-Lagerelemente (14, 16) einliegen, über die sich der Bremshebel (5) und die Druckstempel (4) mit ihrer dem Bremsbelag (2) abgewandten Seite am Bremssattel (1) abstützen, und wobei der Bremsstempel (6) über eine Schnappverbindung lösbar mit dem Bremsbelag (2) verbunden ist.

2. Scheibenbremse nach Anspruch 1, **dadurch gekennzeichnet, dass** der Bremssattel (1) einstückig ausgebildet ist.

3. Scheibenbremse nach Anspruch 1 oder 2, **dadurch gekennzeichnet, dass** die Lageraufnahmen (13, 15) in angeformte Vorsprünge eingebracht sind.

4. Scheibenbremse nach einem der vorhergehenden Ansprüche, **dadurch gekennzeichnet, dass** vier Lageraufnahmen (13, 15) vorgesehen sind und zwar zwei für den Bremshebel (5) und jeweils eine für die Druckstempel (4).

5. Scheibenbremse nach einem der vorhergehenden Ansprüche, **dadurch gekennzeichnet, dass** die dem Bremshebel (5) zugeordneten Gleit-Lagerelemente (14) als Lagerkugeln ausgebildet sind.

6. Scheibenbremse nach einem der vorhergehenden Ansprüche, **dadurch gekennzeichnet, dass** die Gleit-Lagerelemente (16) der Druckstempel (4) durch eine ballige Ausformung der zugeordneten Stirnseite des jeweiligen Druckstempels (4) ausgebildet sind.

7. Scheibenbremse nach einem der vorhergehenden Ansprüche, **dadurch gekennzeichnet, dass** die Gleit-Lagerelemente (16) der Druckstempel (4) jeweils aus einer Lagerkugel gebildet sind.

## Claims

1. A pneumatically actuatable disc brake, with a brake calliper (1) straddling a brake disc, brake linings (2) which can be pressed against the brake disc on both sides, of which a brake lining (2) on the brake application side can be actuated by means of a brake lever (5), which is pivotable about an eccentric axis, of a brake application means, against which lever a brake ram (6) lies on the end face, which brake ram on the other side is connected to the brake lining (2) on the brake application side, two pressure rams (4) which extend in the same direction as the brake ram (6) and are arranged spaced apart therefrom, which pressure rams are connected in each case to the brake calliper (1) and to the brake lining (2) or the guide plate (9), and also a self-energising means, **characterised in that** the brake calliper (1) has spherical-cup-shaped bearing receptacles (13, 15), in which sliding-bearing elements (14, 16) which are adapted thereto lie, via which elements the brake lever (5) and the pressure rams (4) are supported with their side remote from the brake lining (2) on the brake calliper (1), and the brake ram (6) being connected detachably to the brake lining (2) by means of a snap connection.

2. A disc brake according to Claim 1, **characterised in that** the brake calliper (1) is formed in one piece.

3. A disc brake according to Claim 1 or 2, **characterised in that** the bearing receptacles (13, 15) are introduced into formed-on projections.

4. A disc brake according to one of the preceding claims, **characterised in that** four bearing receptacles (13, 15) are provided, namely two for the brake lever (5) and one in each case for the pressure rams (4).

5. A disc brake according to one of the preceding claims, **characterised in that** the sliding-bearing elements (14) associated with the brake lever (5) are formed as ball bearings.

6. A disc brake according to one of the preceding claims, **characterised in that** the sliding-bearing elements (16) of the pressure rams (4) are formed by convex forming of the associated end face of the respective pressure ram (4).

7. A disc brake according to one of the preceding claims, **characterised in that** the sliding-bearing elements (16) of the pressure rams (4) are formed in each case from a ball bearing.

## Revendications

1. Frein à disque à commande pneumatique, comprenant un étrier de frein (1) chevauchant un disque de frein, des garnitures de frein (2) à appliquer contre ledit disque de frein des deux côtés, dont une garniture de frein (2) du côté de serrage est commandable au moyen d'un levier de freinage (5) d'un dispositif de serrage de frein, qui est pivotable autour d'un axe excentrique, auquel levier un poinçon de freinage (6) porte du côté de face, qui, d'autre côté, est raccordé à la garniture de frein (2) du côté de serrage, ainsi que deux poinçons presseurs à la même orientation que ledit poinçon de freinage (6) et disposés à un écart du dernier, dont chacun est raccordé audit étrier de frein (1) et à ladite garniture de frein (2) ou à la plaque de guidage (9), et un moyen d'auto renforcement, **caractérisé en ce que** ledit étrier de frein (1) comprend des éléments récepteurs de logement en calotte (13, 15), dans lesquels se trouvent des éléments de logement lisse y adaptés (14, 16), via lesquels ledit levier de freinage (5) et lesdits poinçons de pression (4) s'appuient par leur côté opposé à ladite garniture de frein (2), et dans lequel ledit poinçon de freinage (6) est relié de façon détachable via un assemblage à encliquetage à ladite garniture de frein (2).

2. Disque de frein selon la revendication 1, **caractérisé en ce que** ledit étrier de frein (1) a une configuration monobloc.

3. Disque de frein selon la revendication 1 ou 2, **caractérisé en ce que** lesdits éléments récepteurs de logement (13, 15) sont montés dans des saillies y moulées.

4. Disque de frein selon une quelconque des revendications précédentes, **caractérisé en ce que** quatre éléments récepteurs de logement (13, 15) sont montés, notamment deux pour ledit levier de freinage (5) et un élément respectif pour lesdits poinçons de pression (4).

5. Disque de frein selon une quelconque des revendications précédentes, **caractérisé en ce que** lesdits éléments de logement lisse (14), qui sont affecté audit levier de freinage (5), sont formés sous forme des billes de logement.

6. Disque de frein selon une quelconque des revendications précédentes, **caractérisé en ce que** lesdits éléments de logement lisse (16) desdits poinçons de pression (4) sont configurés par une formation bombée de la face affectée du poinçon de pression respectif (4).

7. Disque de frein selon une quelconque des revendications précédentes, **caractérisé en ce que** chacun desdits éléments de logement lisse (16) desdits poinçons de pression (4) est formé d'une bille de logement.
